# EUROPEAN PATENT SPECIFICATION

(11) **EP 1 201 113 B1**
(45) Date of publication and mention of the grant of the patent: **29.12.2004**
(21) Application number: 01203997.0
(22) Date of filing: 22.10.2001
(51) Int. Cl.: A01F 7/06

(54) **Rotor assembly for an agricultural combine with a spiral rotor cylinder**
Rotoranordnung für Mähdrescher mit Spiralzylinder
Rotor ensemble pour moissonneuse-batteuse à cylindre en spirale

(30) Priority: 25.10.2000 US 696038
(43) Date of publication of application: 02.05.2002
(73) Proprietor: CNH Belgium N.V., 8210 Zedelgem (BE)
(72) Inventor: Windsor, James E., Geneseo, Illinois 61254 (US)
(74) Representative: Vandenbroucke, Alberic

(56) References cited:
- FR-A- 1 017 168
- US-A- 4 362 168
- US-A- 5 152 717
- US-A- 5 454 758
- US-B1- 6 264 553

## Description

The present invention relates generally to agricultural combines. It relates particularly to the rotor assembly in a rotary combine (See e.g. US-A-4 362 168).

An agricultural combine is a common and well-known machine for harvesting crop materials. Agricultural combines are available in various designs and models to perform the basic functions of reaping crop materials from a crop field, separating the grain from the non-grain crop materials, and discarding the non-grain crop materials back onto the crop field.

A typical combine includes a crop harvesting apparatus, or header, which reaps ripened crop plants from the crop field. The header then feeds the crop materials rearwardly to a threshing apparatus. One type of combine apparatus that is well-known to those skilled in the art is a rotary combine. In such a combine, the crop materials are introduced to the front end of a rotor assembly, which is oriented longitudinally within the combine body with the rear end positioned angularly upwards from the front end. The crop materials are then threshed between the rotating rotor and the inside of the rotor housing.

Along the exterior of the rotor is a series of rasp bars which repeatedly strike the crop plants as they spiral through the annular space between the rotor and rotor housing. The rasp bars also cooperate with spiral vanes along the interior of the rotor housing so that the crop plants feed rearward through the rotor assembly. As the crop materials feed through the rotor assembly, the grain and fine materials are separated from the grain stalks and other course materials. The unwanted course materials continue their rearward travel through the rotor assembly and are discharged out from the rotor assembly's rear end. On the other hand, the grain and fine materials pass through openings in the concaves or the grates which are included along the bottom side of the rotor housing. These materials are then further separated in an area below the rotor assembly by a series of moving sieves and forced air flow. After final separation, the grain is directed to an onboard grain bin through an augering system, with the unwanted fine materials, sometimes referred to as chaff, being discharged out the rear end of the sieves.

An integral component of the rotor assembly is a cylinder. The cylinder extends lengthwise from the impeller to the rear end of the rotor and forms the exterior surface of the rotor's threshing section. The rotor cylinder performs several functions in the threshing operation. First, the rotor cylinder defines the internal surface of the annular space between the rotor housing and the rotor. Secondly, the rotor cylinder provides a mounting surface for the rasp bars.

Traditionally, the rotor cylinder has been manufactured by forming two sections of sheet metal around a welded support structure. With this type of rotor cylinder, the support structure typically includes a center shaft that extends longitudinally along the axis of the rotor. Welded to this shaft are a series of bulkhead supports. Typically, the bulkhead supports include a front bulkhead, a rear bulkhead, and as many as four interior bulkheads. The outer shape of each of the bulkhead supports is circular so that the group of bulkhead supports provide a cylindrical support structure for the sheet metal sections. The sheet metal sections are then formed around the welded support structure with the aid of hydraulic fixtures. The rotor cylinder assembly is completed by overlapping the edges of the two sheet metal sections and welding them together with an ordinary welding process.

A number of problems are associated with rotor cylinders that are manufactured by this process however. One problem is the difficulty of producing a cylindrical shape that is satisfactorily round. With the manufacturing process previously described, the sheet metal surface typically includes depressed and raised areas that make the surface shape uneven. Significant efforts have been made by those skilled in the art to improve the resulting uneven surface, with limited success. These efforts have generally involved the use of complicated fixtures in connection with extensive manual intervention which raises the labor costs of the rotor cylinder substantially.

This inability to produce a round cylindrical surface causes several problems. One significant problem is that the resulting cylinder is usually not rotationally balanced. Because of the high speed at which the rotor rotates, and because of the large size of the rotor, rotational balance of the rotor is essential to acceptable rotor performance. As is well-known by those skilled in the art, an imbalance in the rotor above an unacceptable limit will manifest itself in a violent shaking of the rotor when the rotor is rotated at operational speeds. This imbalance problem is generally corrected by the manufacturer with a balancing process which adds weight to the rotor at specific angular positions in order to compensate for the imbalance.

This roundness problem also affects the positioning of the rasp bars. In order to achieve optimal threshing performance, the entire series of rasp bars must be positioned at equal distances from the inner surface of the concaves. This gap between the rasp bars and the concaves critically affects the performance of the rotor assembly. Therefore, manufacturers typically provide an adjustment mechanism which allows the operator to adjust this gap by repositioning the concaves inward or outward, or side-to-side, for different harvesting conditions. Because of the uneven surface of current rotor cylinders, manufacturers have been forced to individually position each of the rasp bars with shims in order to achieve uniform positioning of the entire series of rasp bars.

Another problem that results from the welded support structure is that the rotor cylinder surface is susceptible to permanent deformations caused by foreign materials during harvesting operations. During harvesting, it is not uncommon for rocks and other hard materials to enter the threshing assembly. Typically, this occurs when the combine operator inadvertently allows the header to contact and dig into the ground soil. These rocks then travel through the rotor assembly's annular space along with the crop materials.

Typically, when a steel sheet is formed in a rounded shape, the sheet acquires a resilience that resists permanent deformations. When a hard object strikes such a surface, the rounded steel will temporarily depress and will rebound back to its original shape when the hard object is removed. However, the bulkhead supports in current rotor cylinders inhibit this resilience by providing a fulcrum point that encourages permanent bending of the cylinder surface. Thus, when a rock strikes the cylinder surface near one of the bulkhead supports, the cylinder surface will tend to permanently bend around the support instead of rebound back to its cylindrical shape. As a result, after extended harvesting operations, the rotor cylinder tends to accumulate regions of permanent deformations along both sides of each of the bulkhead supports in circular paths around the rotor.

Another problem with the current rotor cylinder is that the sheet metal sections are not optimally oriented to achieve a high degree of torsional strength. Typically, sheet metal is manufactured by steel makers by a rolling process which produces a grain structure in the steel elongated in the direction of rolling. As understood by those skilled in the art, the resulting sheet metal is stronger in the direction of elongation of the grains than it is in a direction across the grains. Thus, as the result of the rolling process, the lengthwise direction of the sheet metal sections lies along the grain and the width of the sheet metal sections lies across the grain. Therefore, when the sheet metal sections are formed onto the bracket supports, the grain direction is similarly oriented with the grain running longitudinally along the rotor cylinder. However, the torsional forces that the rasp bars apply to the cylinder surface are generally directed transverse and slightly rearward to the rotor. Accordingly, the applied forces are directed across the grain of the sheet metal, making the rasp bar mountings weaker than they would be if the forces were applied in the direction of the grain instead. In some cases, rasp bars have been known to shear the sheet metal and break loose from the rotor as a result of this problem.

The welded support structure also has the effect of substantially increasing the weight of the rotor. While generally speaking, the increased weight of a rotating object may have a beneficial flywheel effect, the current welded support structure contributes only minimally to this effect because most of the structure's weight is positioned near the rotor's axis of rotation. On the other hand, several disadvantages are associated with the increased weight of the support structure. One disadvantage is the increased material costs of the support structure. This material cost includes the center shaft which extends from the front end of the cylinder to its rear end and the interior bulkhead supports. In addition, the support structure limits the diameter size of the rotor assembly. Generally, larger diameter rotor assemblies are desirable because the annular threshing volume is correspondingly increased. The current support structure, however, limits diameter size increases because the weight of the support structure increases exponentially as the diameter is increased.

Accordingly, it is an object of the invention to provide an improved rotor cylinder construction.

According to the invention, there is provided a rotor for an agricultural harvesting machine, characterised in that said rotor comprises a cylinder formed from a sheet oriented in a spiral around the longitudinal axis of said cylinder.

Such spiral rotor cylinder is considerably more round and stronger than traditional cylinders. This improved roundness of the rotor cylinder reduces rotational imbalances and minimises the shimming operation of the rasp bars.

Additionally, the rotor cylinder may be formed from a laminar sheet that is wound helically around the longitudinal axis of the rotor cylinder.

Advantageously, the sheet may be spiralled so that a seam can be formed between opposite edges of said sheet. Preferably, a continuos seam between the front and the rear end of the cylinder is applied to the rotor. A closed body of the cylinder is obtained providing optimal strength. Good welding quality is realised by using a submerged arc weld along an exterior surface of said seam and/or along an interior surface of said seam.

Preferably, the sheet is orientated in a spiral having a full number of rotations, e.g. two, so that the beginning point and ending point are axially aligned. This provides equal distribution of the extra weight associated with the welded joint of the seam around the circumference of the rotor cylinder, such that the cylinder is substantially more balanced rotationally. The rotor may comprise a front and a rear bulkhead support along the front and rear ends of the cylindrical surface for rotatably mounting the rotor to the harvesting machine. Advantageously, the rotor has no interior center shaft or supports, which otherwise act as a fulcrum to encourage permanent deformations by foreign objects, e.g. stones.

Because the spiral rotor cylinder is stronger, the interior bulkheads and the centre shaft which are used in traditional rotor cylinders can be eliminated.

Such rotor may be used in a crop processing system, e.g. a threshing system, of the harvesting machine.

An embodiment of the present invention will now be described in further detail, by way of example, with reference to the following drawings, in which:
Figure 1 is a side elevational view of an agricultural combine, with part of the combine body broken away to display the rotor assembly and the sieves;
Figure 2 is a perspective view of a rotor; and
Figure 3 is a side elevational view of a rotor cylinder with the impeller assembly and rasp bars omitted, showing the spiral seam.

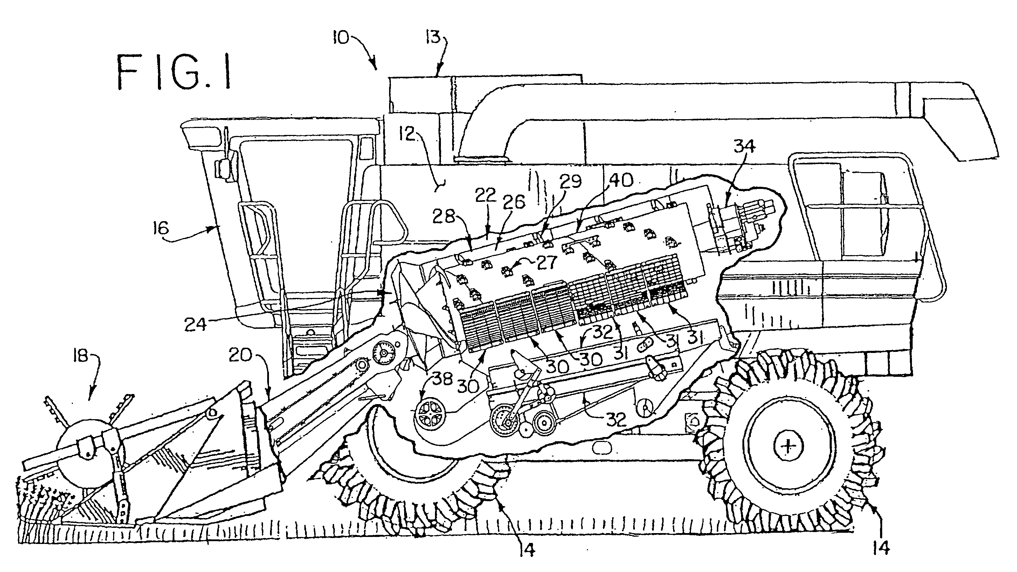

Referring now to the drawings, and particularly to Figure 1, there is shown a self-propelled agricultural combine 10. The combine 10 includes a body 12 supported by wheels 14 and an engine (not shown) for driving the wheels 14 to allow the combine 10 to move from place to place. An operator's station 16 is positioned towards the forward end of the combine body 12 and includes numerous controls to allow the operator to adjust the functions of the combine 10.

At the forward end of the combine 10 is a crop harvesting header 18 that severs and gathers the ripened crop materials from the crop field. After cutting the stems of the crop materials or collecting the crop materials from a prepared windrow, the crop materials are fed rearward through a feeder housing 20 to the threshing assembly 22.

Although a variety of threshing systems are known to those skilled in the art, the present embodiment relates to a rotary thresher 22. In such a system, the crop materials are fed into the forward end of the rotor assembly 22. An impeller 24 is attached to the forward end of the rotor 26 to assist entrance of the crop materials. Spiral vanes 29 attached to the interior of the rotor housing 28 induce the crop materials to move rearward through an annular space between the stationary rotor housing 28 and the rotating rotor 26. As the crop materials travel rearward, they are threshed by a series of rasp bars 27 or other threshing elements attached to the exterior of the rotor 26.

Along the bottom side of the rotor housing 28 are concaves 30 and grates 31 which have perforated openings that allow grain and other fine materials to pass through and away from the rotor assembly 22. Larger materials, such as crop stalks, continue rearward through the rotor assembly 22 and are discharged out the rear end of the rotor assembly 22.

After falling through the concaves 30 or the grates 31, the grain and other fine materials land on top of a series of sieves 32 located below the rotor assembly 22. A driving mechanism (not indicated) creates a constant back-and-forth motion between the sieves 32 so that, as the crop materials pass through the sieves, a number of vanes (not shown) attached to the sieves 32 further separate the grain from the unwanted chaff and other fine materials. After passing through the sieves 32, the grain falls to the bottom of the combine body 12 and is augured up to an onboard storage bin 13. A cleaning fan 38 located forward of the sieves 32 blows air across the sieves 32, thus helping to separate the grain from the fine materials. The cleaning fan 38 also discharges the unwanted fine materials out the rear end of the sieves 32.

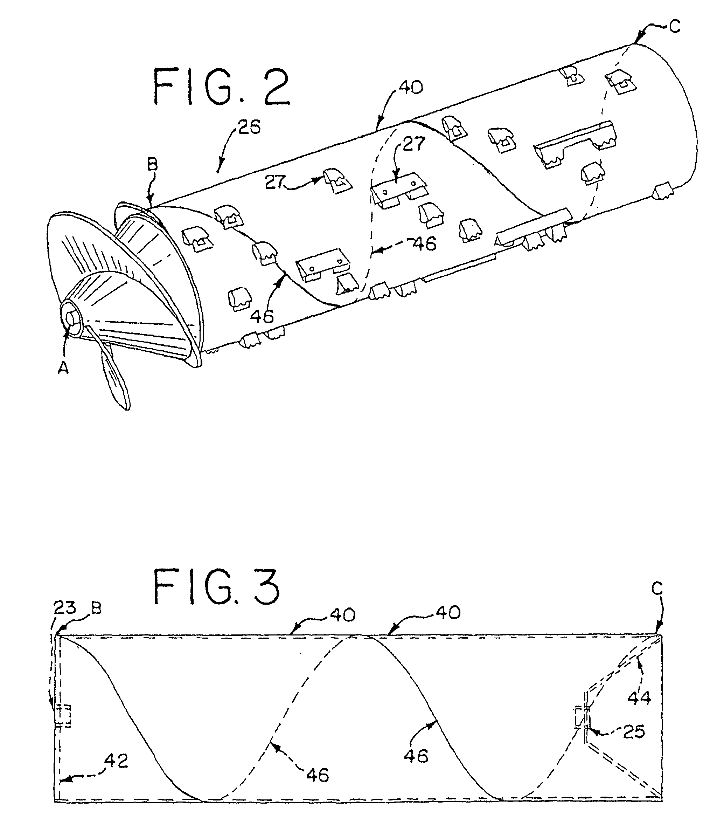

Turning now also to Figures 2 and 3, the rotor 26 is supported coaxially within the rotor housing 28 by front 23 and rear bearings 25. The front bearing 23 is installed into the centre of the front bulkhead 42, and the rear bearing 25 is installed into the centre of the rear bulkhead 44. The cylinder 40 then is supported along its interior by the outer diameters of the front and rear bulkheads 42, 44. A motor 34, or other power source, is provided at the rear end of the rotor 26 for rotationally driving the rotor 26 within the rotor housing 28.

The rotor cylinder 40 is formed with sheet metal that is wound in a spiral or helix about the rotor's axis of rotation A. Thus, in the completed rotor cylinder 40, opposite edges of a single sheet adjoin each other. Although other edge connecting technologies are contemplated, the sheet edges are preferably abutted directly against each other and welded with a submerged arc weld that is applied to both the inside and outside of the seam 46.

In the preferred embodiment, an appropriate pitch is chosen so that a number of full rotations of the seam 46 are produced along the length of the rotor cylinder 40. Thus, the beginning point B of the seam 46 and the ending point C of the seam 46 are radially aligned with each other. In one embodiment of the invention, a helix angle has been chosen to produce two full rotations of the seam 46. By providing a number of full seam 46 rotations, the extra weight associated with the welded joint of the seam 46 is equally distributed around the circumference of the rotor cylinder 40. This aspect therefore, results in a rotor cylinder 40 that is substantially more balanced rotationally than traditional cylinders. Thus, the final balancing operation can be significantly minimised.

Unlike the traditional manufacturing process, the spiral rotor cylinder 40 does not require bulkhead supports in order to form the desired cylindrical shape. In addition, the spiral rotor cylinder 40 provides greater torsional strength than traditional cylinders. Therefore, the rotor does not require the interior bulkhead supports and the centre shaft that traditional cylinders include.

The elimination of the interior bulkhead supports and the centre shaft substantially reduces the weight of the rotor 26. The rotational inertia of the rotor 26 is not significantly reduced, however, because the eliminated components are positioned near the rotor's axis of rotation A. The reduced weight of the rotor 26 also makes it feasible to increase the rotor cylinder's 40 outer diameter. This feature is of great value because an increase in the rotor cylinder's 40 outer diameter will increase the volume of the annular threshing space when the rotor housing 28 is correspondingly enlarged. This increase in threshing volume significantly improves threshing performance. The rotor's 26 rotational inertia is also favourably increased when the rotor cylinder 40 diameter is increased.

Another feature of the embodiment is the rotor cylinder's 40 increased resistance to permanent surface deformations. By eliminating the interior bulkhead supports, the outer diameter of the bulkhead supports no longer acts as a fulcrum to encourage permanent deformations. Instead, the natural tendency of the rotor cylinder's 40 round shape to rebound from depressions resists permanent depressions without the hindrance of a fulcrum point. This prolongs the useful life of the rotor cylinder 40 and prevents threshing performance losses that can result from permanent surface deformations.

The spiral shape of the sheet metal also increases the mounting strength of the rasp bars 27. By orienting the sheet metal of the rotor cylinder 40 along a helix angle that is oblique to the axis of rotation A, the longitudinal grains of the sheet metal are more closely aligned with the expected torsional forces from the rasp bars 27. Thus, the shear strength of the rotor cylinder 40 is increased by directing the threshing forces against the grain of the sheet metal instead of across the grain.

Finally, the manufacturing process of winding the rotor cylinder's 40 sheet metal in a spiral shape provides a finished cylinder 40 that is considerably more round than is possible with traditional manufacturing processes. This feature minimises the shimming operation that must be performed currently to the rasp bars 27 and in many cases allows this operation to be eliminated altogether. The improved roundness of the rotor cylinder 40 also reduces rotational imbalances which must be corrected by a separate balancing operation.

## Claims

1. A rotor (26) for an agricultural harvesting machine (10) **characterised in that** said rotor (26) comprises a cylinder (40) formed from a sheet oriented in a spiral around the longitudinal axis (A) of said cylinder (40).

2. A rotor according to claim 1, **characterised in that** said sheet is a laminar sheet.

3. A rotor according to claim 1 or 2, **characterised in that** a seam (46) is formed between opposite edges of said sheet.

4. A rotor according to claim 3, **characterised in that** said seam (46) is a continuous seam having a beginning point (B) near a front end of said cylinder (40) and an ending point (C) near a rear end of said cylinder.

5. A rotor according to claim 3 or 4, **characterised in that** said seam (46) is joined with a submerged arc weld along an exterior surface of said seam (46) and/or along an interior surface of said seam (46).

6. A rotor according to any of the preceding claims, **characterised in that** said sheet is oriented in a spiral having a number of full rotations so that its beginning point (B) and its ending point (C) are axially aligned.

7. A rotor according to claim 6, **characterised in that** said number of full rotations is two.

8. A rotor according to any of the preceding claims, **characterised in that** said rotor (26) comprises a front bulkhead support (42) along a front end of said cylindrical surface (40) and a rear bulkhead support (44) along a rear end of said cylindrical surface (40).

9. A rotor according to claim 8, **characterised in that** said rotor (26) has no interior centre shaft or supports.

10. A crop processing system comprising a rotor (26) according to any of the preceding claims.

## Patentansprüche

1. Rotor für eine landwirtschaftliche Erntemaschine (10), **dadurch gekennzeichnet, dass** der Rotor (26) einen Zylinder (40) umfasst, der aus einer Bahn gebildet ist, die auf einer Spirale um die Längsachse (A) des Zylinders (40) herum ausgerichtet ist.

2. Rotor nach Anspruch 1, **dadurch gekennzeichnet, dass** die Bahn eine laminare Bahn ist.

3. Rotor nach Anspruch 1 oder 2, **dadurch gekennzeichnet, dass** eine Naht (46) zwischen gegenüberliegenden Kanten der Bahn gebildet wird.

4. Rotor nach Anspruch 3, **dadurch gekennzeichnet, dass** die Naht (46) eine kontinuierliche Naht ist, die einen Anfangspunkt (B) in der Nähe eines vorderen Endes des Zylinders (40) und einen Endpunkt (C) in der Nähe des hinteren Endes des Zylinders aufweist.

5. Rotor nach Anspruch 3 oder 4, **dadurch gekennzeichnet, dass** die Naht (41) durch ein verdecktes Lichtbogen-Schweißen entlang einer Außenoberfläche der Naht (46) und/oder entlang einer Innenoberfläche der Naht (46) verbunden wird.

6. Rotor nach einem der vorhergehenden Ansprüche, **dadurch gekennzeichnet, dass** die Bahn auf einer Spirale mit einer Anzahl von vollen Umdrehungen ausgerichtet ist, so dass ihr Anfangspunkt (B) und ihr Endpunkt (C) in Axialrichtung ausgerichtet sind.

7. Rotor nach Anspruch 6, **dadurch gekennzeichnet, dass** die Anzahl von vollen Umdrehungen gleich zwei ist.

8. Rotor nach einem der vorhergehenden Ansprüche, **dadurch gekennzeichnet, dass** der Rotor (26) eine vordere Stützwand-Halterung (42) entlang eines vorderen Endes der zylindrischen Oberfläche (40) und eine hintere Stützwand-Halterung (44) entlang eines hinteren Endes der zylindrischen Oberfläche (40) umfasst.

9. Rotor nach Anspruch 8, **dadurch gekennzeichnet, dass** der Rotor (26) keine innenliegende Mittelwelle oder Halterungen aufweist.

10. Erntematerial-Verarbeitungssystem, das einen Rotor (26) nach einem der vorhergehenden Ansprüche umfasst.

## Revendications

1. Rotor (26) pour une moissonneuse agricole (10) **caractérisé en ce que** ledit rotor (26) comporte un cylindre (40) formé à partir d'une tôle orientée en spirale autour de l'axe longitudinal (A) dudit cylindre (40).

2. Rotor selon la revendication 1, **caractérisé en ce que** ladite tôle est une tôle laminée.

3. Rotor selon la revendication 1 ou 2, **caractérisé en ce qu'**une jointure (46) est formée entre les bords opposés de ladite tôle.

4. Rotor selon la revendication 3, **caractérisé en ce que** ladite jointure (46) est une jointure continue possédant un point initial (B) à proximité d'une extrémité frontale dudit cylindre (40) et d'un point final (C) à proximité d'une extrémité arrière dudit cylindre.

5. Rotor selon la revendication 3 ou 4, **caractérisé en ce que** ladite jointure (46) est soudée par soudage à l'arc sous flux le long d'une surface extérieure de ladite jointure (46) et/ou le long d'une surface intérieure de ladite jointure (46).

6. Rotor selon l'une quelconque des revendications précédentes, **caractérisé en ce que** ladite tôle est orientée en une spirale possédant un nombre de tours complets, de sorte que son point initial (B) et son point final (C) sont alignés axialement.

7. Rotor selon la revendication 6, **caractérisé en ce que** ledit nombre de tours complets est deux.

8. Rotor selon l'une quelconque des revendications précédentes, **caractérisé en ce que** ledit rotor (26) comporte un support de cloison de séparation avant (42) le long d'une extrémité frontale de ladite surface cylindrique (40) et un support de cloison de séparation arrière (44) le long d'une extrémité arrière de ladite surface cylindrique (40).

9. Rotor selon la revendication 8, **caractérisé en ce que** ledit rotor (26) ne possède pas d'arbre central ni de supports intérieurs.

10. Système de traitement de récolte comprenant un rotor (26) selon l'une quelconque des revendications précédentes.
